# EUROPÄISCHE PATENTSCHRIFT

(11) **EP 2 190 936 B1**
(45) Veröffentlichungstag und Bekanntmachung des Hinweises auf die Patenterteilung: **23.05.2018**
(21) Anmeldenummer: 08785518.5
(22) Anmeldetag: 13.08.2008
(51) Int. Cl.: C09D 5/44, C08G 18/58, C08G 18/80, C08G 59/62, C08G 18/08, C09D 17/00

(54) **EINSATZ VON BISMUTSUBNITRAT IN ELEKTROTAUCHLACKEN**
USE OF BISMUTH SUBNITRATE IN ELECTRO-DIPPING PAINTS
UTILISATION DE SOUS-NITRATE DE BISMUTH DANS DES PEINTURES ÉLECTROPHORÉTIQUES

(30) Priorität: 16.08.2007 DE 102007038824
(43) Veröffentlichungstag der Anmeldung: 02.06.2010
(73) Patentinhaber: BASF Coatings GmbH, 48165 Münster (DE)
(72) Erfinder: GROSSE BRINKHAUS, Karl-Heinz, 48301 Nottuln (DE); NEUMANN, Margret, 48151 Münster (DE); JOHANNPOETTER, Oliver, 48268 Greven (DE); LUX, Peter, 59192 Bergkamen (DE)
(86) Internationale Anmeldenummer: PCT/EP2008/006642
(87) Internationale Veröffentlichungsnummer: WO 2009/021719

(56) Entgegenhaltungen:
- EP-A- 0 690 106
- EP-A- 1 518 906
- WO-A-98/10024
- GB-A- 2 368 302

## Beschreibung

Die Erfindung betrifft kathodisch abscheidbare Elektrotauchlacke, die Bismutverbindungen enthalten, ein Verfahren zur Herstellung dieser Elektrotauchlacke und ihre Verwendung.

Aus der Patentliteratur sind zahlreiche Beispiele für die Herstellung von Elektrotauchlacken bekannt. Insbesondere Zinn- und/oder Bismutverbindungen werden hierbei als Vernetzungskatalysatoren eingesetzt. Hierbei werden in der letzten Zeit die Bismutverbindungen bevorzugt als Vernetzungskatalysatoren eingesetzt, da sie neben ihrer hohen Aktivität auch eine im Vergleich zu den Zinnverbindungen geringe Toxizität besitzen. Der Einsatz von Bismutverbindungen als Katalysator bei der Bildung von Urethanstrukturen aus Isocyanat- und Hydroxylgruppen ist schon seit langem bekannt (J.H. Saunders and K.C. Frisch, Polyurethanes, Chemistry and Technology aus High Polymers, Vol. XVI, Part 1, Interscience Publishers, a division of John Wiley and Sons, New York, 4th Printing, July 1967, Seite 167). Allerdings ist der Einsatz von Bismutverbindungen als Katalysator bei der Herstellung von Elektrotauchlacken bisher sehr eingeschränkt. In EP 0 642 558 werden die für den Einsatz von Elektrotauchlacken möglichen Bismutverbindungen deutlich eingeschränkt, da die leicht verfügbaren Salze längerkettiger Säuren, wie z.B. Bismutoctanoat und Bismutneodekanoat beim Einsatz in kationischen Bindemitteln Störungen durch ölartige Ausscheidungen verursachen. Des weiteren sollen anorganische Bismutverbindungen durch Einmischen in das Bindemittel oder in eine Pigmentpaste nur schlecht verteilbar und in dieser Form nur wenig katalytisch sein. In dem europäischen Patent EP 0 739 389 wird ein vereinfachtes Verfahren zur Herstellung einer korrosionsschützenden Lackierung mittels Elektrotauchlackierung beschrieben, in dem der Elektrotauchlack Bismutlactat oder Bimutdimethylpropionat enthält. Es werden weitere mögliche Bismutverbindungen erwähnt, jedoch fehlen hier nähere Angaben, insbesondere werden in den Beispielen nur die Salze der Milchsäure und Dimethylpropionsäure eingesetzt. Bismutsubnitrat wird nicht erwähnt. Weitere Bismutkomplexe auf Basis von Aminosäuren (EP 0 927 232) oder Alkansulfonsäuren (EP 1 163 302) werden als gut einsetzbare und stabile Katalysatorsysteme in Elektrotauchlacken beschrieben. Zur Verbesserung des Korrosionsschutzes von Elektrotauchlacken wird in der DE 100 01 222 A1 die Verwendung von kolloidalem Bismut genannt. In diesem deutschen Patent werden Bismutsalze aliphatischer Carbonsäuren eingesetzt. Ein weiterer Einsatz von Bismutsalzen organischer Carbonsäuren wird in einem Elektrotauchlack der deutschen Patentanmeldung DE 44 34 593 A1 beschrieben. Bei der Herstellung dieses korrosionsschützenden Lacks sollten toxische Bestandteile weitgehend vermieden werden. In der deutschen Patentanmeldung DE 102 36 350 A1 werden Bismutsubsalicylat enthaltende Elektrotauchlacke beschrieben, die einen guten Verlauf haben, frei von Oberflächenstörungen sind und einen guten Korrosionsschutz gewährleisten. Allerdings erfordern diese bekannten Elektrotauchlacke eine relativ hohe Einbrenntemperatur, um eine ausreichende Vernetzung zu erzielen.

Aufgabe der vorliegenden Erfindung ist es, neue Bismutverbindungen enthaltende Elektrotauchlacke zu finden, wobei die Vernetzungsreaktionen im erfindungsgemäßen Elektrotauchlack bei möglichst niedrigen Einbrenntemperaturen stattfinden sollen.

Überraschender Weise wurde gefunden, dass beim Einsatz von basischem Bismutnitrat (a.g. Bismutsubnitrat) als Vernetzungskatalysator das Einbrennen der auf einem Substrat abgeschiedenen Filme bei niedrigeren Temperaturen möglich ist.

Gegenstand der Erfindung ist daher ein Elektrotauchlack, der eingangs genannten Art, der dadurch gekennzeichnet ist, dass die Bismutverbindung ein basisches Bismutnitrat ist.

Im Hinblick auf den Stand der Technik war es überraschend und für den Fachmann nicht vorhersehbar, dass die der Erfindung zugrunde liegende Aufgabe mit Hilfe der basischen Bismutsubnitrate gelöst werden konnte. Insbesondere war es überraschend, dass die erfindungsgemäßen Elektrotauchlacke sich einfach herstellen ließen, lagerstabil waren, eine optimale Teilchengröße der dispergierten Bestandteile aufwiesen und sehr gut filtrierbar waren. Sie ließen sich in einfacher Weise problemlos elektrophoretisch auf elektrisch leitfähigen Substraten abscheiden. Die resultierenden Elektrotauchlackierungen hatten einen guten Verlauf, waren frei von Oberflächenstörungen und Stippen und boten einen hervorragenden Korrosions- und Kantenschutz.

In den europäischen Patentanmeldungen EP 151 0558 B1 und EP 1 518 906 werden viele verschiedene Metallsalze u.a., auch das Bismutsalz der Salpetersäure für die Herstellung von Elektrotauchlacken eingesetzt. Allerdings beschreiben die beiden Patentschriften nicht den Einsatz von basischen Bismutnitraten. Die europäischen Patentschriften offenbaren auch nicht die Absenkung der Einbrenntemperatur durch Zugabe der Bismutsalze der Salpetersäure als Vernetzungskatalysator. Außerdem ist Bismutnitrat gut wasserlöslich im Gegensatz zu dem in der vorliegenden Anmeldung eingesetzten wasserunlöslichen Bismutsubnitrat. Gelöste Bi-Salze können einige Nachteile in den Elektrotauchlacken aufzeigen. Lösliche Salze werden im Ultrafiltrat aufgenommen und somit auf diesem Wege ständig dem Elektrotauchlack entzogen. Außerdem können nach der Vorbehandlung der Karosserie Fremdionen in das Elektrotauchlackbad getragen werden. Diese Fremdionen können die löslichen Bi-Katalysatoren deaktivieren (EP 1 342 757).

Die erfindungsgemäßen Elektrotauchlacke weisen vorzugsweise einen Festkörpergehalt von 5 bis 50, bevorzugt 5 bis 35 Gew.-% auf. Hierbei ist unter Festkörper der Anteil eines Elektrotauchlacks zu verstehen, der die hieraus hergestellte Elektrotauchlackierung aufbaut. Die erfindungsgemäßen Elektrotauchlacke enthalten mindestens ein Bindemittel.

Die Bindemittel enthalten reaktive funktionelle Gruppen, die mit in Vernetzungsmitteln vorhandenen komplementären reaktiven funktionellen Gruppen thermische Vernetzungsreaktionen eingehen können.

Das Bindemittel enthält kationische und/oder potentiell kationische Gruppen. Bindemittel dieser Art werden in kathodisch abscheidbaren Elektrotauchlacken eingesetzt.

Beispiele geeigneter potentiell kationischer Gruppen, die durch Neutralisationsmittel und/oder Quaternisierungsmittel in Kationen überführt werden können, sind primäre, sekundäre oder tertiäre Aminogruppen, sekundäre Sulfidgruppen oder tertiäre Phoshingruppen, insbesondere tertiäre Aminogruppen oder sekundäre Sulfidgruppen.

Beispiele geeigneter kationischer Gruppen sind primäre, sekundäre, tertiäre oder quarternäre Ammoniumgruppen, tertiäre Sulfoniumgruppen oder quarternäre Phosphoniumgruppen, vorzugsweise quarternäre Ammoniumgruppen oder tertiäre Sulfoniumgruppen, insbesondere aber quarternäre Ammoniumgruppen.

Beispiele geeigneter Neutralisationsmittel für die potentiell kationischen Gruppen sind anorganische und organische Säuren wie Schwefelsäure, Salzsäure, Phosphorsäure, Ameisensäure, Essigsäure, Milchsäure, Dimethylolpropionsäure, Zitronensäure oder Sulfonsäuren, wie Amidosulfonsäuren und Alkansulfonsäuren, wie zum Beispiel Methansulfonsäure, insbesondere Ameisensäure, Essigsäure oder Milchsäure.

Beispiele geeigneter Bindemittel für Elektrotauchlacke sind aus den Druckschriften EP 0 082 291A1, EP 0 234 395 A1, EP 0 227 975A1, EP 0 178 531 A1, EP 0 333 327, EP 0 310 971A1, EP 0 456 270 A1, US 3,922,253 A, EP 0 261 385 A1, EP 0 245 786A1, EP0 414 199A1, EP 0 476 514 A1, EP 0 817 684A1, EP 0 639 660A1, EP 0 595 186A1, DE 41 26 476A1, WO 98/33835, DE 33 00 570A1, DE 37 38 220A1, DE 35 18 732A1 oder DE 196 18 379 A1bekannt. Hierbei handelt es sich vorzugsweise um primäre, sekundäre, tertiäre oder quarternäre Amino- oder Ammoniumgruppen und/oder tertiäre Sulfoniumgruppen enthaltende Harze mit Aminzahlen vorzugsweise zwischen 20 und 250 mg KOH/g und einem gewichtsmittleren Molekulargewicht von 300 bis 10.000 Dalton. Insbesondere werden Amino(meth)acrylatharze, Amonoepoxidharze, Aminoepoxidharze mit endständigen Doppelbindungen, Aminoepoxidharze mit primären und/oder sekundären Hydroxylgruppen, Aminopolyurethanharze, aminogruppenhaltige Polybutadienharze oder modifizierte Epoxidharz-Kohlendioxid-Amin-Umsetzungsprodukte verwendet.

Beispiele geeigneter reaktiver funktioneller Gruppen sind Hydroxylgruppen, Thiolgruppen und primäre und sekundäre Aminogruppen, insbesondere Hydroxylgruppen.

Beispiele geeigneter komplementärer reaktiver funktioneller Gruppen sind blockierte Isocyanatgruppen.

Als Vernetzungsmittel kommen alle üblichen und bekannten Vernetzungsmittel in Betracht, die geeignete komplementäre reaktive funktionelle Gruppen enthalten. Vorzugsweise werden die Vernetzungsmittel aus der Gruppe, bestehend aus blockierten Polyisocyanaten, Melamin-Formaldehyd-Harzen, Tris(alkoxycarbonylamino)triazinen und Polyepoxiden, ausgewählt. Bevorzugt werden die Vernetzungsmittel aus der Gruppe, bestehend aus blockierten Polyisocyanaten und hoch reaktiven Melamin-Formaldehyd-Harzen, ausgewählt. Besonders bevorzugt werden die blockierten Polyisocyanate eingesetzt.

Die blockierten Polyisocyanate werden aus üblichen und bekannten Lackpolyisocyanaten mit aliphatisch, cycloaliphatisch, araliphatisch und/oder aromatisch gebundenen Isocyanatgruppen hergestellt.

Beispiele für geeignete Lackpolyisocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Lackpolyisocyanate sind Isocyanurat-, Biuret-, Allophanat-, Iminooxadiazindion-, Urethan-, Harnstoff-, Carbodiimid- und/oder Uretdiongruppen aufweisende Polyisocyanate, die aus üblichen und bekannten Diisocyanaten erhältlich sind. Vorzugsweise werden als Diisocyanate Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, 1,8-Diisocyanato-4-isocyanatomethyl-octan, 1,7-Diisocyanato-4-isocyanatomethyl-heptan, 1-Isocyanato-2-(3-isocyanatopropyl)cyclohexan, 2,4- und/oder 2,6-Toluylendiisocyanat, 4,4'-Diphenylmethandiisocyanat, Naphthalindiisocyanat oder Mischungen aus diesen Polyisocyanaten eingesetzt.

Beispiele für geeignete Blockierungsmittel zur Herstellung der blockierten Polyisocyanate sind
i) Phenole, wie Phenol, Cresol, Xylenol, Nitrophenol, Chlorophenol, Ethylphenol, t-Butylphenol, Hydroxybenzoesäure, Ester dieser Säure oder 2,5-Di-tert.-butyl-4-hydroxytoluol;
ii) Lactame, wie ε-Caprolactam, δ-Valerolactam, γ-Butyrolactam oder β-Propiolactam;
iii) aktive methylenische Verbindungen, wie Diethylmalonat, Dimethylmalonat, Acetessigsäureethyl- oder -methylester oder Acetylaceton;
iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
vi) Säureamide wie Acetoanilid, Acetoanisidinamid, Acrylamid, Methacrylamid, Essigsäureamid, Stearinsäureamid oder Benzamid;
vii) Imide wie Succinimid, Phthalimid oder Maleinimid;
viii) Amine wie Diphenylamin, Phenylnaphthylamin, Xylidin, N-Phenylxylidin, Carbazol, Anilin, Naphthylamin, Butylamin, Dibutylamin oder Butylphenylamin;
ix) Imidazole wie Imidazol oder 2-Ethylimidazol;
x) Harnstoffe wie Harnstoff, Thioharnstoff, Ethylenharnstoff, Ethylenthioharnstoff oder 1,3-Diphenylharnstoff;
xi) Carbamate wie N-Phenylcarbamidsäurephenylester oder 2-Oxazolidon;
xii) Imine wie Ethylenimin;
xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;
xiv) Salze der schwefeligen Säure wie Natriumbisulfit oder Kaliumbisulfit;
xv) Hydroxamsäureester wie Benzylmethacrylohydroxamat (BMH) oder Allylmethacrylohydroxamat; oder
xvi) substituierte Pyrazole, Imidazole oder Triazole; sowie
xvii) 1,2-Polyole wie Ethylenglykol, Propylenglykol, 1,2-Butandiol;
xviii) 2-Hydroxyester wie 2-Hydroxyethylacrylat, 2-Hydroxyethylmethacrylat;
xix) Gemische dieser Blockierungsmittel.

Erfindungsgemäß enthalten die erfindungsgemäßen Elektrotauchlacke Bismutsubnitrat der Summenformel 4(BiNO₃(OH)₂)BiO(OH). Es hat einen Bismutgehalt nach DAB7 von 71 bis 74 Gew.-%. Das Bismutsubnitrat ist eine handelsübliche Verbindung und wird beispielsweise von der Firma MCP HEK GmbH, Lübeck, vertrieben. Vorzugsweise enthalten die erfindungsgemäßen Elektrotauchlacke, bezogen auf ihren Festkörper, 0,05 bis 5, bevorzugt 0,1 bis 4 und insbesondere 0,2 bis 3 Gew.-% Bismutsubnitrat.

Darüber hinaus können die erfindungsgemäßen Elektrotauchlacke noch mindestens einen üblichen und bekannten Zusatzstoff, ausgewählt aus der Gruppe, bestehend aus von Bismutsubnitrat verschiedenen Katalysatoren, Pigmenten, Antikrateradditiven, Polyvinylalkoholen, thermisch härtbaren Reaktivverdünnern, molekulardispers löslichen Farbstoffen, Lichtschutzmitteln, wie UV-Absorbern und reversiblen Radikalfängern (HALS), Antioxidantien, niedrig- und hochsiedenden ("lange") organischen Lösemitteln, Entlüftungsmitteln, Netzmitteln, Emulgatoren, Slipadditiven, Polymerisationsinhibitoren, thermolabilen radikalischen Initiatoren, Haftvermittlern, Verlaufmitteln, filmbildenden Hilfsmitteln, Flammschutzmitteln, Korrosionsinhibitoren, Rieselhilfen, Wachsen, Sikkativen, Bioziden und Mattierungsmitteln, in wirksamen Mengen enthalten.

Weitere Beispiele geeigneter Zusatzstoffe werden in dem Lehrbuch »Lackadditive« von Johan Bieleman, Wiley-VCH, Weinheim, New York, 1998, in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschrieben.

Vorzugsweise werden Pigmente als Zusatzstoffe eingesetzt. Vorzugsweise werden die Pigmente aus der Gruppe, bestehend aus üblichen und bekannten farbgebenden, effektgebenden, elektrisch leitfähigen, magnetisch abschirmenden, fluoreszierenden, füllenden und korrosionshemmenden organischen und anorganischen Pigmenten, ausgewählt.

Die erfindungsgemäßen Elektrotauchlacke werden durch Vermischen und Homogenisieren der vorstehend beschriebenen Bestandteile und gegebenenfalls mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizern hergestellt. Dabei werden die Pigmente vorzugsweise in der Form von Pigmentpasten oder Pigmentpräparationen in die Elektrotauchlacke eingearbeitet (vgl. Römpp Lexikon Lacke und Druckfarben, Georg Thieme Verlag, Stuttgart, New York, 1998, »Pigmentpräparationen«, Seite 452). Ein weiterer besonderer Vorteil des erfindungsgemäßen verwendenden Bismutsubnitrat ist, dass es sich hervorragend in die Pigmentpasten und die erfindungsgemäßen Elektrotauchlacke einarbeiten lässt.

Aus den erfindungsgemäßen Elektrotauchlacken können üblicherweise auf elektrisch leitfähigen, beispielsweise elektrisch leitfähigen oder leitfähig gemachten, beispielsweise durch Metallisierung elektrisch leitfähig gemachten Kunststoffsubstraten oder insbesondere metallischen Substraten kathodisch abgeschieden werden. Die Erfindung betrifft daher auch das Verfahren zur kathodischen Abscheidung der erfindungsgemäßen Elektrotauchlacken auf der derartigen Substraten. Als metallische Substrate können Teile aus sämtlichen üblichen Metallen, beispielsweise die in der Automobilindustrie üblichen Metallteile, insbesondere Automobilkarossen und deren Teile eingesetzt werden.

Im Folgenden wird die Erfindung anhand eines Beispiels und eines Vergleichsbeispiels näher erläutert.

### Beispiel 1:

### 1.1 Herstellung des Vernetzungsmittels V1 (=Beispiel 1 aus DE197 03 869)

In einem Reaktor, der mit einem, Rückflusskühler, Innenthermometer und Inertgaseinleitung ausgestattet ist, werden 1084 Teile Isomere und höherfunktionelle Oligomere auf Basis von 4,4-Diphenylmethandiisocyanat mit einem NCO-Equivalentgewicht von 135 (Basonat® A270, BASF AG) unter Stickstoffatmosphäre vorgelegt. Man gibt 0,6 Teile Dibutylzinndilaurat zu und tropft 1314 Teile Butyldiglycol mit einer solchen Geschwindigkeit zu, dass die Produkttemperatur unter 70°C bleibt. Gegebenenfalls muss gekühlt werden. Die Temperatur wird weitere 120 min bei 70°C gehalten. Bei der nachfolgenden Kontrolle sind keine NCO-Gruppen mehr nachweisbar. Man kühlt auf 70°C ab. Der Feststoffgehalt liegt bei >97%.

### 1.2 Herstellung der wässrigen Bindemitteldispersion D1 (=Beispiel 2.3 aus DE 197 03 869)

In einem Reaktor, der mit einem, Rückflusskühler, Innenthermometer und Inertgaseinleitung ausgestattet ist, werden 1128 Teile eines handelsüblichen Epoxidharzes auf Basis Bisphenol A mit einem Epoxidäquivalentgewicht (EEW) von 188,94 Teile Phenol, 228 Teile Bisphenol A vorgelegt und unter Stickstoff auf 130°C aufgeheizt. Unter Rühren werden 1,5 g Triphenylphosphin zugegeben, worauf eine exotherme Reaktion eintritt und die Temperatur auf 160°C steigt. Man lässt wieder auf 130°C abkühlen und kontrolliert anschließend das EEW. Der Sollwert liegt bei 478. Sodann werden 15,7 Teile Plastilit 3060 (BASF AG) unter gleichzeitiger Kühlung zugegeben. Bei 95°C gibt man 115,5 Teile Diethanolamin zu, worauf eine exotherme Reaktion eintritt. Nach 40 Minuten gibt man 61,2 Teile N,N-Dimethylaminopropylamin zu. Nach kurzzeitiger Exothermie (140°C) lässt man den Ansatz für 2 Stunden bei 130°C weiterreagieren, bis die Viskosität konstant bleibt.
In das resultierende Reaktionsgemisch werden rasch 97,6 Teile Butylglykol und 812 Teile der 70°C warmen Lösung des Vernetzungsmittels V2 eingerührt und trägt bei 105°C aus.

2400 Teile der resultierenden Mischung werden unverzüglich in eine vorgelegte Mischung aus 2173 Teilen entmineralisiertem Wasser und 49,3 Teilen Eisessig eindispergiert. Nach Zugabe von weiteren 751 Teilen entmineralisiertem Wasser resultiert eine stabile Dispersion mit den folgenden Kennzahlen:

| | |
|---|---|
| Festkörper (60min/130°C) | : 45,1 % |
| PH-Wert | : 5,9 |
| Mittlere Teilchengröße | : 145nm |

### 1.3 Herstellung der Reibharzlösung R1

Gemäß EP 505 445 B1, Beispiel 1.3, stellt man ein Reibharz her, das der besseren Handhabung wegen der zusätzlich mit 2,82 Teilen Eisessig und 13,84 Teilen VE-Wasser neutralisiert und verdünnt wird. Der ursprüngliche Feststoffgehalt wird dadurch auf 60% abgesenkt.

### 1.4 Herstellung wässriger Pigmentpasten

### 1.4.1 Pigmentpaste P1 (erfindungsgemäße Pigmentpaste)

Die folgenden Komponenten werden nacheinander zu einem schnelllaufenden Dissolverrührwerk gegeben und 30 min. gemischt:

| | | |
|---|---|---|
| 32,3 | Teile | entmineralisiertes Wasser |
| 24,1 | Teile | Reibharzlösung R1 |
| 5,6 | Teile | Aluminiumsilikat Extender (ASP 200) |
| 0,6 | Teile | Ruß |
| 32,7 | Teile | Titandioxid (TI-PURE R 900, DuPont) |
| 4,7 | Teile | Bismut-Subnitrat (Bi-Gehalt 71-74 %; Lieferant z.B. HEK-Lübeck |

Anschließend wird die Mischung in einer Labor-Rührwerksmühle während 1- 2 h zu einer Hegman-Feinheit von 12 µm dispergiert und ggf. mit weiterem Wasser auf die gewünschte Verarbeitungsviskosität eingestellt.

### 1.4.2 Pigmentpaste P2 (Vergleichsbeispiel)

Gemäß dem Verfahren unter 1.4.1 wird die Pigmentpaste 2 hergestellt, allerdings werden anstelle des Bismut-Subnitrats 6,0 Teile Bismut-Subsalicylat (Bi-Gehalt 56-59%, HEK-Lübeck) zugegeben.

### 1.5 Herstellung der Elektrotauchlacke

Zur Prüfung als kathodisch abscheidbare Elektrotauchlacke werden die beschriebenen wässrigen Bindemitteldispersionen und Pigmentpasten entsprechend der folgenden Tabelle kombiniert. Man verfährt dabei so, dass die Bindemitteldispersion vorgelegt und mit entionisiertem Wasser verdünnt wird. Anschließend wird unter Rühren die Pigmentpaste eingetragen. Die angegebenen Werte entsprechen Gewichtsanteilen.

| Elektrotauchlack (ETL) Nr. | ETL 1 | ETL 2 |
|---|---|---|
| Bindemitteldispersion D1 | 2114 | 2114 |
| Pigmentpaste P1 | 294 | |
| Pigmentpaste P2 | | 294 |
| Entmineralisiertes Wasser | 2592 | 2592 |

### 2. Prüfung der Elektrotauchlacke

Die erfindungsgemäßen Elektrotauchlackbäder werden 24 h bei Raumtemperatur unter Rühren gealtert. Die Abscheidung der Elektrotauchlacke erfolgt auf kathodisch geschalteten zinkphosphatierten Stahltafeln. Die Abscheidezeit beträgt 120 s bei einer Badtemperatur von 32°C. Die Abscheidespannung wird so gewählt, dass eine Schichtdicke des eingebrannten Lackfilms von 20 µm resultiert.

Der abgeschiedene Lackfilm wird mit entionisiertem Wasser abgespült und 15 min bei der vorgegebenen Objekttemperatur eingebrannt.

Zur Prüfung des Vernetzungszustandes der eingebrannten Lackfilme wurde die Beständigkeit gegen Butanon (Methylethylketon) als Lösemittel nach DIN EN 13523-11 (Reibtest) ermittelt. Dazu wurde die Zahl der Doppelhübe bestimmt, bei der eine deutliche Schädigung des Lackfilms erkennbar wurde. Bei einem Maximalwert von 100 Doppelhüben wurde der Lackfilm als i. O. bewertet.

In der folgenden Tabelle 1 und Grafik 1 sind die Ergebnisse des erfindungsgemäßen Elektrotauchlackes (ETL1) und des Vergleichbeispiels (ETL2) bei verschiedenen Einbrenntemperaturen aufgeführt.

Aus den Daten ist ersichtlich, dass die Vernetzungsreaktion im erfindungsgemäßen Elektrotauchlack schon bei 5-10°C niedrigeren Einbrenntemperaturen ausreichend ist.

**Tabelle 1**

| **Beständigkeit gegen Lösemittel (DIN EN 13523-11, Reibtest mit MEK)** | | |
|---|---|---|
| | **ETL1 (erfindungsgemäß)** | **ETL2 (Vergleichsbeispiel)** |
| **Einbrenn-Temp.** | **Doppelhübe mit MEK** | |
| 150°C | 6 | 4 |
| 155°C | 34 | 18 |
| 160°C | 70 | 24 |
| 165°C | 100 | 50 |
| 170°C | 100 | 100 |
| 175°C | 100 | 100 |

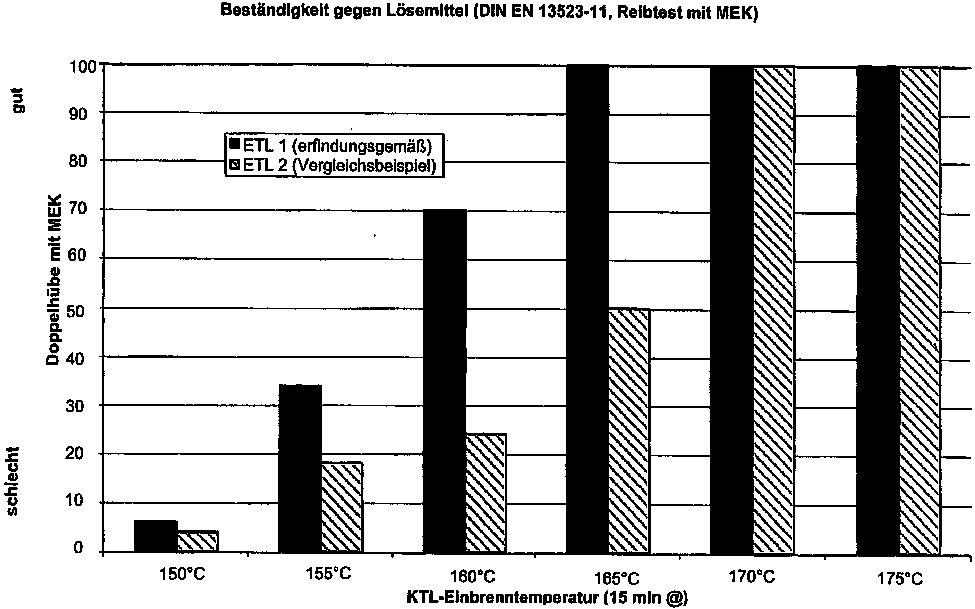

## Patentansprüche

1. Kathodisch abscheidbarer Elektrotauchlack, enthaltend mindestens ein Bindemittel und mindestens einen Vernetzer sowie eine Bismutverbindung, **dadurch gekennzeichnet, dass** die Bismutverbindung ein basisches, wasserunlösliches Bismutsubnitrat ist und der Elektrotauchlack 0.05 bis 5 Gew-% Bismutsubnitrat bezogen auf seinen Festkörpergehalt enthält.

2. Elektrotauchlack nach Anspruch 1, **dadurch gekennzeichnet, dass** das basische Bismutsubnitrat einen Bismutgehalt von 70 Gew.% bis 75 Gew. % hat.

3. Elektrotauchlack nach einem der Ansprüche 1 oder 2, **dadurch gekennzeichnet, dass** das basische Bismutsubnitrat ein Bismutsubnitrat der Summenformel 4(BiNO₃(OH)₂)BiO(OH) ist.

4. Elektrotauchlack nach einem der Ansprüche 1 bis 3, **dadurch gekennzeichnet, dass** das Bindemittel kationische Gruppen enthält.

5. Elektrotauchlack nach einem der Ansprüche 1 bis 4, **dadurch gekennzeichnet, dass** die reaktiven funktionellen Gruppen Hydroxylgruppen sind.

6. Elektrotauchlack nach einem der Ansprüche 1 bis 5, **dadurch gekennzeichnet, dass** der Vernetzer ein blockiertes Polyisocyanat ist.

7. Elektrotauchlack nach einem der Ansprüche 1 bis 6, **dadurch gekennzeichnet, dass** er mindestens einen Zusatzstoff aus der Gruppe bestehend aus Pigmenten, Füllstoffen, Netz-und Dispergiermitteln, Lichtschutzmitteln und Korrosionsinhibitoren enthält.

8. Verfahren zur Herstellung des Elektrotauchlacks nach Anspruch 1 bis 7, **dadurch gekennzeichnet, dass** das Bindemittel, der Vernetzer und alle weiteren Bestandteile mit einem basischen, wasserunlöslichen Bismutsubnitrat vermischt werden.

9. Verwendung des Elektrotauchlacks nach einem der Ansprüche 1 bis 7 zur kathodischen Tauchlackierung.

10. Verwendung des Elektrotauchlacks nach einem der Ansprüche 1 bis 7 zur Herstellung von Grundierungsschichten durch kathodische Tauchlackierung von Substraten mit elektrisch leitfähigen Oberflächen.

11. Verwendung des Elektrotauchlacks nach einem der Ansprüche 1 bis 7, bei der Lackierung von Kraftfahrzeugen oder deren Teilen.

12. Verwendung von basischem, wasserunlöslichem Bismutsubnitrat als Vernetzungskatalysator in kathodisch abscheidbaren Elektrotauchlacken, wobei die Elektrotauchlacke 0,05 bis 5 Gew.% Bismutsubnitrat bezogen auf ihren Festkörpergehalt enthalten.

## Claims

1. Cathodically depositable electrocoat material comprising at least one binder and at least one crosslinker and also a bismuth compound, **characterized in that** the bismuth compound is a basic, water-insoluble bismuth subnitrate and the electrocoat material comprises 0.05 to 5% by weight of bismuth subnitrate relative to the solids content thereof.

2. Electrocoat material according to Claim 1, **characterized in that** the basic bismuth subnitrate has a bismuth content of 70% to 75% by weight.

3. Electrocoat material according to either of Claims 1 and 2, **characterized in that** the basic bismuth subnitrate is a bismuth subnitrate of empirical formula 4(BiNO₃(OH)₂)BiO(OH).

4. Electrocoat material according to any one of Claims 1 to 3, **characterized in that** the binder contains cationic groups.

5. Electrocoat material according to any one of Claims 1 to 4, **characterized in that** the reactive functional groups are hydroxyl groups.

6. Electrocoat material according to any one of Claims 1 to 5, **characterized in that** the crosslinker is a blocked polyisocyanate.

7. Electrocoat material according to any one of Claims 1 to 6, **characterized in that** it comprises at least one additive from the group consisting of pigments, fillers, wetting agents, dispersants, light stabilizers, and corrosion inhibitors.

8. Process for producing the electrocoat material according to Claim 1 to 7, **characterized in that** the binder, the crosslinker, and all other constituents are mixed with a basic, water-insoluble bismuth subnitrate.

9. Use of the electrocoat material according to any one of Claims 1 to 7 for cathodic electrodeposition coating.

10. Use of the electrocoat material according to any one of Claims 1 to 7 for producing primer coats by cathodic electrodeposition coating of substrates having electrically conductive surfaces.

11. Use of the electrocoat material according to any one of Claims 1 to 7 in the painting of motor vehicles or parts thereof.

12. Use of basic, water-insoluble bismuth subnitrate as a crosslinking catalyst in cathodically depositable electrocoat materials, wherein the electrocoat materials comprise 0.05 to 5% by weight of bismuth subnitrate relative to the solids content thereof.

## Revendications

1. Peinture électrophorétique pouvant être déposée par voie cathodique, contenant au moins un liant et au moins un agent de réticulation, ainsi qu'un composé de bismuth, **caractérisée en ce que** le composé de bismuth est un sous-nitrate de bismuth basique insoluble dans l'eau, et la peinture électrophorétique contient 0,05 à 5 % en poids de sous-nitrate de bismuth, par rapport à sa teneur en solides.

2. Peinture électrophorétique selon la revendication 1, **caractérisée en ce que** le sous-nitrate de bismuth basique a une teneur en bismuth de 70 % en poids à 75 % en poids.

3. Peinture électrophorétique selon l'une quelconque des revendications 1 ou 2, **caractérisée en ce que** le sous-nitrate de bismuth basique est un sous-nitrate de bismuth de formule totale 4(BiNO₃(OH)₂)BiO(OH).

4. Peinture électrophorétique selon l'une quelconque des revendications 1 à 3, **caractérisée en ce que** le liant contient des groupes cationiques.

5. Peinture électrophorétique selon l'une quelconque des revendications 1 à 4, **caractérisée en ce que** les groupes fonctionnels réactifs sont des groupes hydroxyle.

6. Peinture électrophorétique selon l'une quelconque des revendications 1 à 5, **caractérisée en ce que** l'agent de réticulation est un polyisocyanate bloqué.

7. Peinture électrophorétique selon l'une quelconque des revendications 1 à 6, **caractérisée en ce qu'**elle contient au moins un additif du groupe constitué par les pigments, les charges, les agents mouillants et dispersants, les agents photoprotecteurs et les inhibiteurs de corrosion.

8. Procédé de fabrication de la peinture électrophorétique selon les revendications 1 à 7, **caractérisé en ce que** le liant, l'agent de réticulation et tous les autres constituants sont mélangés avec un sous-nitrate de bismuth basique insoluble dans l'eau.

9. Utilisation de la peinture électrophorétique selon l'une quelconque des revendications 1 à 7 pour la peinture électrophorétique cathodique.

10. Utilisation de la peinture électrophorétique selon l'une quelconque des revendications 1 à 7 pour la fabrication de couches de base par peinture électrophorétique cathodique de substrats ayant des surfaces électriquement conductrices.

11. Utilisation de la peinture électrophorétique selon l'une quelconque des revendications 1 à 7 pour la peinture de véhicules automobiles ou leurs parties.

12. Utilisation de sous-nitrate de bismuth basique insoluble dans l'eau en tant que catalyseur de réticulation dans des peintures électrophorétiques pouvant être déposées par voie cathodique, les peintures électrophorétiques contenant 0,05 à 5 % en poids de sous-nitrate de bismuth, par rapport à leur teneur en solides.
